# EUROPEAN PATENT SPECIFICATION

(11) **EP 4 209 279 B1**
(45) Date of publication and mention of the grant of the patent: **24.12.2025**
(21) Application number: 21864110.8
(22) Date of filing: 18.08.2021
(51) Int. Cl.: B05C 11/10, H01M 4/139, H01M 10/04, B05C 5/02, H01M 4/04

(54) **COATING DEVICE**
BESCHICHTUNGSVORRICHTUNG
DISPOSITIF DE REVÊTEMENT

(30) Priority: 01.09.2020 JP 2020146729
(43) Date of publication of application: 12.07.2023
(73) Proprietor: Toray Engineering Co., Ltd., Tokyo 103-0028 (JP)
(72) Inventor: MAEDA, Kazunori, Otsu-shi, Shiga 520-0842 (JP); KITAJIMA, Kenji, Otsu-shi, Shiga 520-0842 (JP); WATANABE, Atsushi, Otsu-shi, Shiga 520-0842 (JP); MOTOI, Masashi, Otsu-shi, Shiga 520-0842 (JP)
(74) Representative: Global IP Europe Patentanwaltskanzlei
(86) International application number: PCT/JP2021/030258
(87) International publication number: WO 2022/050052

(56) References cited:
- DE-B4- 102010 017 965
- JP-A- 2002 045 762
- JP-A- 2003 205 262
- JP-A- 2014 237 106
- JP-A- 2015 153 527
- JP-A- 2016 167 402
- JP-A- 2019 171 283
- JP-A- 2020 032 361
- JP-A- 2020 113 382
- JP-A- 2020 131 145
- JP-A- 2020 131 145

## Description

### [TECHNICAL FIELD]

The present invention relates to a coating device for coating a substrate with a coating film, and a coating method.

### [BACKGROUND ART]

A slurry is applied to a substrate fed out roll-to-roll, through a discharge port of a die to form a coating film, thereby manufacturing a battery electrode plate or the like. In the case of a battery, for example, the thickness of the coating film formed on the substrate directly affects the charge and discharge capacity of the battery, and therefore it is extremely important to control the film thickness of the coating liquid applied to the substrate. That is, the coating liquid needs to be applied in a consistent thickness along the width direction and feed direction of the substrate.

Patent Literature 1 describes a configuration in which a discharge port (adjustment unit) is provided so that the thickness of the coating film layer formed on the substrate is kept uniform even if the coating liquid is continuously discharged over an extended period of time.

JP 2003 205262 A, JP 2019 171283 A, and DE 10 2010 017965 B each disclose a coating device configured to form a coating film on a substrate by discharging a coating liquid from a slit that is longer in a width direction and is provided to a die, the coating device comprising: a first flow path that is a flow path configured to supply the coating liquid toward the die; a first manifold that is linked to the first flow path and is configured to hold the coating liquid that flows in from the first flow path; a plurality of second flow paths that are linked to the first manifold; a second manifold that is linked to the second flow paths and the slit, is longer in the width direction, and is configured to hold the coating liquid that flows in from the second flow paths; and an adjustment unit that is provided along at least one of the second flow paths and is configured to adjust a flow of the coating liquid flowing through the second flow paths.

### [PRIOR ART DOCUMENT]

### [PATENT LITERATURE]

Patent Literature 1: Japanese Laid-Open Patent Application Publication No. 2015-97198

### [SUMMARY OF THE INVENTION]

### [PROBLEMS TO BE SOLVED BY THE INVENTION]

However, with the coating device described in Patent Literature 1, the slurry is prone to separating because of the pressure applied to the slurry inside the die. Therefore, when the slurry discharged from the discharge port is returned to the tank for reuse, so that the slurry can be used more efficiently, there is a problem in that the quality of the coating film may be affected.

The present invention was conceived in light of the above problem, and it is an object thereof to provide a coating device with which it is possible to apply a coating film of good quality and uniform thickness.

### [MEANS TO SOLVE THE PROBLEM]

In order to solve the above problem, a coating device of the present invention is a coating device configured to form a coating film on a substrate by discharging a coating liquid from a slit that is longer in a width direction and is provided to a die, the coating device comprising a first flow path that is a flow path configured to supply the coating liquid toward the die, a first manifold that is linked to the first flow path and is configured to hold the coating liquid that flows in from the first flow path, a plurality of second flow paths that are linked to the first manifold, a second manifold that is linked to the second flow paths and the slit, is longer in the width direction, and is configured to hold the coating liquid that flows in from the second flow paths, and an adjustment unit that is provided along at least one of the second flow paths and is configured to adjust a flow of the coating liquid flowing through the second flow paths. The second manifold is divided into a plurality of parts in the width direction.

With this coating device, a coating film of good quality and uniform thickness can be applied. More specifically, because the first manifold is comprised and the adjustment unit is provided to the second flow paths, the flow distribution of the coating liquid flowing into the second manifold in the width direction can be adjusted very precisely, so that the coating liquid can be discharged from the slit more precisely in order to form a uniform coating film on the substrate with respect to the width direction. Also, since the coating liquid is not returned to the tank after being discharged, a coating film of higher quality can be formed.

Also, the first manifold and the adjustment unit are preferably provided on the outside of the die.

This prevents the configuration of the die from becoming overly complicated.

Also, the first manifold and at least a coating liquid flow path portion of the adjustment unit are provided on the inside of the die.

This prevents the configuration of the piping structure up to the die from becoming overly complicated.

Also, the lengths of the plurality of the second flow paths are preferably equal to each other.

This makes it easier to adjust the flow distribution in the width direction of the coating liquid flowing into the second manifold.

Also, it is preferable if the first manifold is longer in one direction, and linking portions between the plurality of the second flow paths and the first manifold are arranged in a lengthwise direction of the first manifold.

This allows the length of each second flow path to be easily adjusted.

Also, an intermittent supply unit that is configured to intermittently supply the coating liquid is preferably provided to a supply path of the coating liquid to the first flow path.

This allows a coating film having a uniform thickness in the width direction to be intermittently applied to the substrate.

Also, the coating liquid is preferably a slurry for manufacturing battery electrode plates.

Since a slurry for manufacturing battery electrode plates is prone to separation, the coating device of the present invention can be used to advantage because part of the coating liquid supplied to the die is not returned to the tank.

### [EFFECTS OF THE INVENTION]

With the coating device of the present invention, a coating film of good quality and uniform thickness can be applied.

### [BRIEF DESCRIPTION OF THE DRAWINGS]

FIG. 1 is a diagram illustrating the schematic configuration of the coating device in an embodiment of the present invention;
FIG. 2 is a cross-sectional view in the arrow a direction in FIG. 1;
FIG. 3(a) is a cross-sectional view in the arrow b direction in FIG. 1, and (b) is a plan view of a shim plate; and
FIG. 4 is a diagram illustrating another embodiment of the present invention.

### [EMBODIMENTS TO CARRY OUT THE INVENTION]

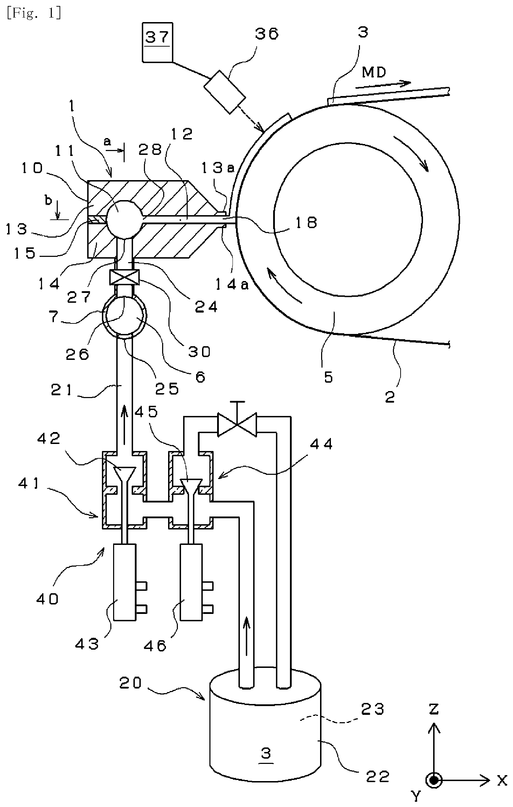

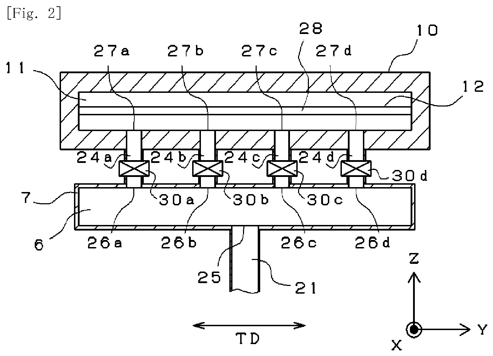

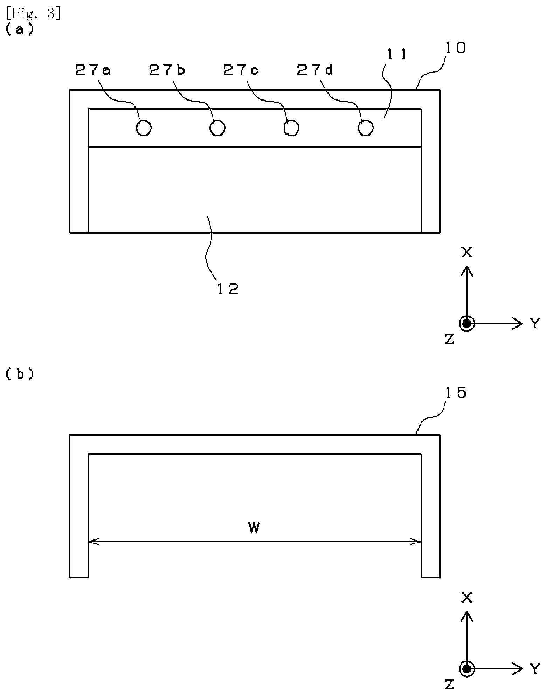

A coating device 1 in an embodiment of the present invention will be described with reference to FIGS. 1 to 3. FIG. 1 is a diagram illustrating the schematic configuration of the coating device in an embodiment of the present invention. FIG. 2 is a cross-sectional view in the arrow a direction in FIG. 1. FIG. 3(a) is a cross-sectional view in the arrow b direction in FIG. 1, and (b) is a plan view of a shim plate 15.

The coating device 1 is used for applying a coating liquid 3 to a substrate 2 that is fed out in roll-to-roll fashion. The coating liquid 3 is applied in a uniform thickness (uniform coating amount) along the feed direction MD of the substrate 2. The width direction TD of the substrate 2 is a direction perpendicular to the feed direction MD of the substrate 2, and corresponds to the Y axis direction in FIG. 1.

The coating device 1 comprises a die 10 that is configured longer in the width direction of the substrate 2, and a supply means 20 for supplying the coating liquid 3 to the die 10. In the die 10, the lengthwise direction (the Y axis direction in FIG. 1) is called the width direction TD, and is the same as the width direction TD of the substrate 2. With this coating device 1, a roller 5 is installed opposite the die 10, and the width direction TD of the die 10 is parallel with the direction of the rotational center line of the roller 5. The substrate 2 is guided by the roller 5, and the distance (gap) between the substrate 2 and the die 10 (the distal end of the slit 12; discussed below) is kept constant, and the coating liquid 3 is applied in this state.

Also, the coating liquid 3 in this embodiment is a slurry for manufacturing a battery electrode plate, consisting of an active material, a binder, and a conductive additive dispersed in a solvent. In this embodiment, the slurry discharged from the die 10 has a viscosity ranging from several thousand to several tens of thousand cP (when shear rate = 1).

The die 10 is configured such that a first split body 13 having a tapered first lip 13a, and a second split body 14 having a tapered second lip 14a are put together with a shim plate 15 sandwiched in between. FIG. 2 is a cross-sectional view in the arrow a direction in FIG. 1. FIG. 3(a) is a cross-sectional view in the arrow b direction in FIG. 1, and the shim plate 15 is shown in FIG. 3(b). In the interior of the die 10, a second manifold 11 for holding the coating liquid 3, which consists of a substantially cylindrical space that is longer in the width direction TD, and a slit 12 linked to this second manifold 11 are formed, and a discharge port 18 which is the open end of the slit 12 is formed between the first lip 13a and the second lip 14a. That is, the second manifold 11 and the discharge port 18 are linked via the slit 12.

The slit 12 is formed longer in the width direction TD, similarly to the second manifold 11, and the width direction dimension of the slit 12 is determined by the inner dimension W of the shim plate 15 (see FIG. 3(b)), and the coating liquid 3 can be applied to the substrate 2 in a width direction dimension substantially equal to that of the slit 12. The gap dimension (height dimension) of the slit 12 is 0.4 to 1.5 mm, for example. In this embodiment, the die 10 is installed in such an orientation such that the gap direction of the slit 12 is the vertical direction and the width direction is the horizontal direction. In other words, the die 10 is installed in such an orientation such that the second manifold 11 and the slit 12 are aligned in the horizontal direction. Therefore, the direction in which the coating liquid 3 held in the second manifold 11 flows to the substrate 2 through the slit 12 and the discharge port 18 is horizontal.

The pressure (coating pressure) inside the second manifold 11 can be adjusted by varying the thickness of the shim plate 15, and the coating film thickness can be freely varied by this adjustment.

Also, the second manifold 11 is provided with a plurality of inlets 27 (inflow ports 27a to 27d) for the coating liquid 3 in the width direction shown in FIG. 2, and the coating liquid 3 goes through these inlets 27 to fill the second manifold 11.

Also, in this embodiment, the direction in which the coating liquid 3 flows to the substrate 2 through the discharge port 18 is the horizontal direction, but is not necessarily limited to this and can be changed as appropriate. For instance, this direction may be upward or downward, and can be set to any direction.

The supply means 20 has a tank 22 that holds the coating liquid 3, a first flow path 21 that is a pipe that is connected to the tank 22 and serves as a flow path for supplying the coating liquid 3 toward the die 10, and a pump 23 for supplying the coating liquid 3 inside the tank 22 to the die 10 through the first flow path 21.

A manifold member 7 having a first manifold 6, which is a substantially cylindrical space that is longer in one direction and holds the coating liquid 3, is provided between the supply means 20 and the second manifold 11 in the flow of the coating liquid 3. Also, in this embodiment, the lengthwise direction of the first manifold 6 is the same direction as the lengthwise direction of the die 10 and the second manifold 11 (that is, the width direction TD), and the sizes of the manifolds (the cross-sectional area) are roughly such that the second manifold 11 is smaller than the first manifold 6, but since the respective roles are different, this size relationship may not apply in every case. The first manifold 6 is used for uniformly supplying from the pump 23 to a plurality of adjustment units 30 arranged in the width direction of the die 10, and is preferably as large as possible.

On the other hand, the second manifold 11 disposed downstream of the adjustment units 30 has a function of adjusting the film thickness in the width direction, and thus the appropriate size is found depending on the amount of the coating liquid supplied, the supply rate, the thickness, and the adjustment amount of the adjustment units. Also, the second manifold 11 is divided into a plurality of parts in the width direction.

An inflow port 25 is provided at a specific location of the first manifold 6 (the middle portion in this embodiment), and the coating liquid 3 supplied from the supply means 20 through the inflow port 25 fills the first manifold 6.

A plurality of outflow ports 26 (outflow ports 26a to 26d) for the coating liquid 3 are provided in the lengthwise direction of the first manifold 6 as shown in FIG. 2. The outflow ports 26a to 26d of the first manifold 6 and the inflow ports 27a to 27d of the second manifold 11 are linked together via pipes or the like to form flow paths for the coating liquid 3. In the present invention, these flow paths are called second flow paths 24, and in this embodiment, four second flow paths (second flow paths 24a to 24b) are provided between the first manifold 6 and the second manifold 11 as shown in FIG. 2.

Also, in this embodiment, the first manifold 6 is disposed near the die 10, and the lengthwise direction of the first manifold 6 is parallel to the width direction of the die 10 as mentioned above. Consequently, the length of the pipe forming each of the second flow paths 24 is relatively short, and all of the second flow paths 24 are the same length. More specifically, the length of each pipe connecting the first manifold 6 and the die 10 is from 30 to 300 mm. As a result, the pressure loss is substantially the same in all the pipes forming the second flow paths 24.

Here, an adjustment unit 30 for adjusting the rate at which the coating liquid 3 flows through the second flow paths 24 is provided along at least one of the second flow paths 24 and outside the die 10. In this embodiment, as shown in FIG. 2, all of the second flow paths 24 (second flow paths 24a to 24b) are provided with the adjustment portions 30 (adjustment portions 30a to 30d). These adjusting units 30a to 30d adjust the rate at which the coating liquid 3 flows out of the outlets 26a to 26d, which are the ends of the second flow paths 24a to 24d, and thereby adjust the distribution of the flow of the coating liquid 3 to the second manifold 11 in the width direction TD. This adjusts the distribution of the amount of the coating liquid discharged from the discharge ports 18 in the width direction TD.

In this embodiment, the adjustment units 30 are valves whose aperture can be adjusted by electrical control, and have the function of adjusting the rate at which the coating liquid 3 passes through the units. The adjusting units 30 may also adjust the pressure of the coating liquid 3 passing through the units.

The coating device 1 comprises a sensor 36 that measures the film thickness of the coating liquid 3 applied to the substrate 2 (see FIG. 1). A plurality of sensors 36 may be provided along the width direction. The sensor 36 is a non-contact type and can measure the film thickness of the coating liquid 3 on the substrate 2 at a plurality of locations along the width direction or over the entire length of the width direction TD, and the measurement result is outputted to a control device (computer) 37 provided to the coating device 1. The controller 37 performs feedback control based on the measurement result from the sensor 36, and the apertures of the adjustment units 30a to 30d are adjusted independently of each other. That is, the controller 37 outputs a control signal to each of the adjustment units 30a to 30d according to the measurement result of the film thickness of the coating liquid 3, and adjusts the aperture of each of the adjustment units 30a to 30d.

Also, in this embodiment, an intermittent supply unit 40 for intermittently supplying the coating liquid 3 is provided between the tank 22 and the first flow path 21, that is, along the supply path of the coating liquid 3 to the first flow path 21, allowing the coating liquid 3 to be intermittently applied to the substrate 2 as shown in FIG. 1. More specifically, the intermittent supply unit 40 has a supply valve 41, and the position of a valve body 42 provided inside the supply valve 41 changes according to the operation of a shaft by an air cylinder 43, which makes it possible to switch between two states, namely, an open state that forms a flow path for the coating liquid 3, and a closed state that blocks the flow path of the coating liquid 3. Here, when the supply valve 41 is opened, the coating liquid 3 is discharged from the discharge port 18 of the die 10 to start coating, and when the supply valve 41 is closed, the supply of coating liquid 3 to the die 10 is cut off to halt the coating of the substrate 2 with the coating liquid 3. That is, a coating film is intermittently formed on the substrate 2 by controlling the operation of the air cylinder 43 to control the position of the valve body 42 and repeatedly opening and closing the supply valve 41.

Also, the intermittent supply unit 40 has a return valve 44 ahead of the supply valve 41, and while the valve body 42 of the supply valve 41 is closed and the supply of the coating liquid 3 to the die 10 is cut off, the valve body 45 of the return valve 44 is open, so that the coating liquid 3 is collected in the tank 22. Also, while the valve body 42 of the supply valve 41 is open and the coating liquid 3 is being supplied to the die 10, the valve body 45 of the return valve 44 is closed. This valve body 45 is driven by an air cylinder 46.

The effect of the coating device 1 configured as above is as follows.

In the coating device 1, the adjustment units 30 are provided to the second flow paths 24, a plurality of which are disposed and connected in the lengthwise direction of the second manifold 11 (the width direction of the die 10). As a result, for example, feedback control based on the measurement result from the sensor 36 is performed for each adjustment unit 30 to adjust the rate at which the coating liquid 3 flows into the second manifold 11 from each inlet 27, which allows for precise adjustment so that the coating liquid 3 can be precisely discharged from the slit 12 of the die 10 in order to form a coating film of a specific shape (such as uniform film thickness) on the substrate 2 with respect to the width direction. Also, with this coating device 1, since the coating liquid 3 is not returned to the tank 22 after being discharged, when the coating liquid 3 is a slurry used for manufacturing battery electrode plates, for example, the separated coating liquid 3 will not end up being admixed into the tank 22, and a coating film of good quality can be formed on the substrate 2. Also, unlike a configuration in which some of the coating liquid 3 is discharged from the die 10, the flow rate in each of the second flow paths 24 can be adjusted without changing the total amount of the coating liquid 3 that is supplied from all of the second flow paths 24 to the second manifold 11, so the specified amount of the coating liquid 3 can be stably applied to the substrate 2.

Also, the first manifold 6 is disposed where the first flow path 21 branches out into the plurality of second flow paths 24, and the coating liquid 3 flows into the second flow paths 24 only after the coating liquid 3 has been collected in the first manifold 6, which makes it possible to send the coating liquid 3 at a substantially uniform flow rate to each of the second flow paths 24 through each outlet 25, and the adjustment units 30 can be used to their full potential despite lacking robustness in the aperture range of the valve. As a result, the coating liquid 3 can be adjusted even more precisely so as to be precisely discharged from the slit 12 of the die 10 in order to form a coating film having the specified shape on the substrate 2 with respect to the width direction.

Also, the first manifold 6 is disposed near the die 10 so that its lengthwise direction is the same as the lengthwise direction of the second manifold 11, and the outflow ports 26, which are where the first manifold 6 and the second flow paths 24 are linked, are arranged in the lengthwise direction of the first manifold 6, making it easy to arrive at a design such that the plurality of second flow paths 24 are all the same length. Since the second flow paths 24 are all the same length, the pressure loss in the pipes forming the second flow paths 24 is uniform, making it easy to adjust the flow distribution in the width direction of the coating liquid 3 flowing into the second manifold 11.

Also, because the supply path of the coating liquid 3 to the first flow path 21 has the intermittent supply unit 40 that intermittently supplies the coating liquid 3, the substrate 2 can be coated intermittently with a coating film having a uniform thickness in the width direction.

Here, the adjustment units 30 are not limited to being electrically controlled, and may instead adjust the aperture manually. When using manual adjustment units 30, the operator may determine the optimal aperture for each adjustment unit 30 on the basis of the measurement result for the film thickness of the coating film on the substrate 2 by the sensor 36, and adjust the aperture of the adjustment units 30 manually.

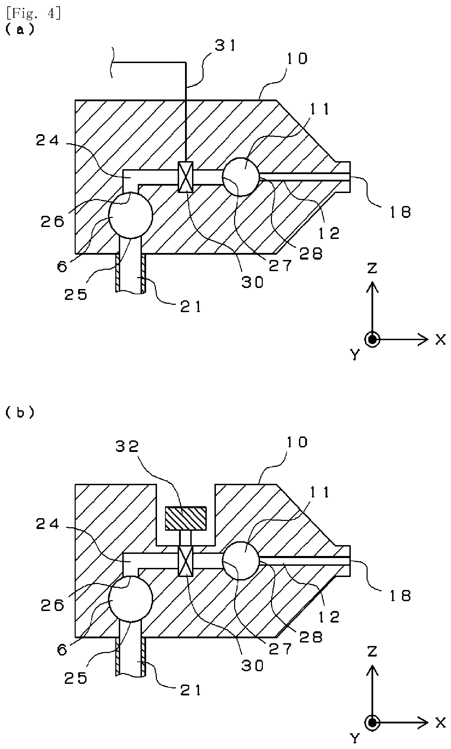

Next, a coating device 1, and in particular a die 10, according to another embodiment of the present invention will be described with reference to FIGS. 4(a) and (b).

With the die 10 shown in FIGS. 4(a) and (b), the first manifold 6 is also configured to be inside the die 10, and the second flow paths 24 linking the first manifold 6 and the second manifold 11 are also configured to be inside the die 10.

With the die 10 such as this, the configuration is more complex than that of the die 10 shown in FIGS. 1 to 3, but the first flow path 21 is the only flow path connected to the die 10, so the piping structure up to the die 10 will not be as complicated.

With the die 10 shown in FIG. 4(a), the adjustment units 30 are electrically controlled and disposed inside the die 10. Electrical wires 31 connected to the pipe 30 come out of the die 10 and are electrically connected to a control device 37 (not shown). This allows the aperture of the valves of the adjustment units 30 disposed inside the die 10 to be electrically controlled from the outside of the die 10.

On the other hand, with the die 10 shown in FIG. 4(b), the adjustment units 30 have displacement units 32 that vary the opening surface area of the second flow paths 24 according to the change in the flow rate of the coating liquid. The displacement units 32 may be provided along the second flow paths 11, and may be, for example, a needle valve or a handle of a valve whose aperture is manually adjusted.

With the coating device described above, it is possible to apply a coating film of good quality and uniform thickness.

Here, the coating device of the present invention is not limited to the configuration described above, and may have some other configuration within the scope of the present invention. For example, the lengths of the plurality of second flow paths do not necessarily need to be uniform, and the lengthwise direction of the first manifold provided outside the die does not necessarily need to coincide with the lengthwise direction of the die and the second manifold.

Also, in the above description, the adjustment unit is provided along all of the second flow paths, but some of the second flow paths may not be provided with an adjustment unit. For example, one second flow path of the plurality of the second flow paths may not be provided with an adjustment unit.

Also, the supply valve 41 and the return valve 44 forming the intermittent supply unit 40 are not limited to being air-driven, and may be motor-driven, for example.

### [INDUSTRIAL APPLICABILITY]

The present invention can be widely applied to coating devices that apply a coating liquid to a substrate.

### [DESCRIPTION OF THE REFERENCE NUMERALS]

1 coating device
2 substrate
3 coating liquid
5 roller
6 first manifold
7 manifold member
10 die
11 second manifold
12 slit
18 discharge port
20 supply means
21 first flow path
22 tank
23 pump
24 second flow path
25 inflow port
26 outflow port
26a outflow port
26b outflow port
26c outflow port
26d outflow port
27 inflow port
27a inflow port
27b inflow port
27c inflow port
27d inflow port
28 outflow port
30 adjustment unit
31 electrical wire
32 displacement unit
36 sensor
37 control device
40 intermittent supply unit
41 supply valve
42 valve body
43 air cylinder
44 return valve
45 valve body
46 air cylinder

## Claims

1. A coating device configured to form a coating film on a substrate by discharging a coating liquid from a slit (12) that is longer in a width direction (TD) and is provided to a die (10), the coating device comprising:
a first flow path (21) that is a flow path configured to supply the coating liquid toward the die (10);
a first manifold (6) that is linked to the first flow path (21) and is configured to hold the coating liquid that flows in from the first flow path (21);
a plurality of second flow paths (24) that are linked to the first manifold (6);
a second manifold (11) that is linked to the second flow paths (24) and the slit (12), is longer in the width direction (TD), and is configured to hold the coating liquid that flows in from the second flow paths (24); and
an adjustment unit (30) that is provided along at least one of the second flow paths (24) and is configured to adjust a flow of the coating liquid flowing through the second flow paths (24),
**characterized in that**
the second manifold (11) is divided into a plurality of parts in the width direction (TD).

2. The coating device according to claim 1, wherein
the first manifold (6) and the adjustment unit (30) are provided on the outside of the die (10).

3. The coating device according to claim 1, wherein
the first manifold (6) and at least a coating liquid flow path portion of the adjustment unit (30) are provided on the inside of the die (10).

4. The coating device according to any one of claims 1 to 3, wherein
the lengths of the plurality of the second flow paths (24) are equal to each other.

5. The coating device according to any one of claims 1 to 4, wherein
the first manifold (6) is longer in one direction, and linking portions between the plurality of the second flow paths (24) and the first manifold (6) are arranged in a lengthwise direction (Y) of the first manifold (6).

6. The coating device according to any one of claims 1 to 5, wherein
an intermittent supply unit (40) that is configured to intermittently supply the coating liquid is provided to a supply path of the coating liquid to the first flow path (21).

## Patentansprüche

1. Beschichtungsvorrichtung, die konfiguriert ist, einen Beschichtungsfilm auf einem Substrat zu bilden, indem sie eine Beschichtungsflüssigkeit aus einem Schlitz (12) ausstößt, der in einer Breitenrichtung (TD) länger ist und einem Werkzeug (10) zugeführt wird, wobei die Beschichtungsvorrichtung aufweist:
einen ersten Strömungsweg (21), der ein Strömungsweg ist, der konfiguriert ist, die Beschichtungsflüssigkeit zum Werkzeug (10) zuzuführen;
einen ersten Verteiler (6), der mit dem ersten Strömungsweg (21) verbunden ist und konfiguriert ist, die Beschichtungsflüssigkeit aufzunehmen, die aus dem ersten Strömungsweg (21) einströmt;
mehrere zweite Strömungswege (24), die mit dem ersten Verteiler (6) verbunden sind;
einen zweiten Verteiler (11), der mit den zweiten Strömungswegen (24) und dem Schlitz (12) verbunden ist, in der Breitenrichtung (TD) länger ist und
konfiguriert ist, die Beschichtungsflüssigkeit aufzunehmen, die von den zweiten Strömungswegen (24) einströmt; und
eine Einstelleinheit (30), die entlang mindestens eines der zweiten Strömungswege (24) vorgesehen und konfiguriert ist, einen Durchfluss der durch die zweiten Strömungswege (24) strömenden Beschichtungsflüssigkeit einstellt,
**dadurch gekennzeichnet, dass**
der zweite Verteiler (11) in der Breitenrichtung (TD) in mehrere Teilen unterteilt ist.

2. Beschichtungsvorrichtung nach Anspruch 1, wobei
der erste Verteiler (6) und die Einstelleinheit (30) an der Außenseite des Werkzeugs (10) vorgesehen sind.

3. Beschichtungsvorrichtung nach Anspruch 1, wobei
der erste Verteiler (6) und mindestens ein Beschichtungsflüssigkeits-Strömungswegabschnitt der Einstelleinheit (30) an der Innenseite des Werkzeugs (10) vorgesehen sind.

4. Beschichtungsvorrichtung nach einem der Ansprüche 1 bis 3, wobei
die Längen der mehreren zweiten Strömungswege (24) einander gleich sind.

5. Beschichtungsvorrichtung nach einem der Ansprüche 1 bis 4, wobei
der erste Verteiler (6) in einer Richtung länger ist, und Verbindungsabschnitte zwischen den mehreren zweiten Strömungswegen (24) und dem ersten Verteiler (6) in einer Längsrichtung (Y) des ersten Verteilers (6) angeordnet sind.

6. Beschichtungsvorrichtung nach einem der Ansprüche 1 bis 5, wobei
eine intermittierende Zufuhreinheit (40), die konfiguriert ist, die Beschichtungsflüssigkeit intermittierend zuzuführen, an einem Zufuhrweg der Beschichtungsflüssigkeit zu dem ersten Strömungsweg (21) vorgesehen ist.

## Revendications

1. Dispositif de revêtement configuré pour former un film de revêtement sur un substrat en déchargeant un liquide de revêtement à partir d'une fente (12) qui est plus longue dans le sens de la largeur (TD) et est fournie à une filière (10), le dispositif de revêtement comprenant :
une première voie d'écoulement (21) qui est une voie d'écoulement configurée pour fournir le liquide de revêtement vers la filière (10) ;
un premier collecteur (6) relié à la première voie d'écoulement (21) et configuré pour contenir le liquide de revêtement qui s'écoule de la première voie d'écoulement (21) ;
une pluralité de deuxièmes voies d'écoulement (24) qui sont reliées au premier collecteur (6) ;
un deuxième collecteur (11) qui est relié aux deuxièmes voies d'écoulement (24) et à la fente (12), qui est plus long dans le sens de la largeur (TD) et qui est configuré pour contenir le liquide de revêtement qui s'écoule à partir des deuxièmes voies d'écoulement (24) ; et
une unité de réglage (30) qui est fournie le long d'au moins une des deuxièmes voies d'écoulement (24) et qui est configurée pour régler le débit du liquide de revêtement qui s'écoule à travers les deuxièmes voies d'écoulement (24),
**caractérisé en ce que**
le deuxième collecteur (11) est divisé en plusieurs parties dans le sens de la largeur (TD).

2. Dispositif de revêtement selon la revendication 1, dans lequel
le premier collecteur (6) et l'unité de réglage (30) sont placés à l'extérieur de la filière (10).

3. Dispositif de revêtement selon la revendication 1, dans lequel
le premier collecteur (6) et au moins une partie de la voie d'écoulement du liquide de revêtement de l'unité de réglage (30) sont prévus à l'intérieur de la filière (10).

4. Dispositif de revêtement selon l'une quelconque des revendications 1 à 3, dans lequel
les longueurs de la pluralité des deuxièmes voies d'écoulement (24) sont égales entre elles.

5. Dispositif de revêtement selon l'une quelconque des revendications 1 à 4, dans lequel
le premier collecteur (6) est plus long dans une direction, et les parties de liaison entre la pluralité des deuxièmes voies d'écoulement (24) et le premier collecteur (6) sont disposées dans une direction longitudinale (Y) du premier collecteur (6).

6. Dispositif de revêtement selon l'une quelconque des revendications 1 à 5, dans lequel
une unité d'alimentation intermittente (40) configurée pour fournir de manière intermittente le liquide de revêtement est fournie à une voie d'alimentation du liquide de revêtement vers la première voie d'écoulement (21).
